# EUROPÄISCHE PATENTSCHRIFT

(11) **EP 3 391 524 B1**
(45) Veröffentlichungstag und Bekanntmachung des Hinweises auf die Patenterteilung: **04.01.2023**
(21) Anmeldenummer: 16704160.7
(22) Anmeldetag: 08.02.2016
(51) Int. Cl.: H02M 1/36, H02M 7/483, H02M 1/096

(54) **KONVERTERMODUL FÜR EINEN MEHRSTUFENUMRICHTER UND VERFAHREN ZU DESSEN BETRIEB**
CONVERTERMODULE FOR MULTILEVELCONVERTERS AND ITS WORKINGPROCESS
MODULE DE CONVERSION DESTINÉ À UN CONVERTISSEUR MULTINIVEAUX ET SON PROCÉDÉ D'OPERATION.

(43) Veröffentlichungstag der Anmeldung: 24.10.2018
(73) Patentinhaber: Siemens Energy Global GmbH & Co. KG, 81739 München (DE)
(72) Erfinder: KNAAK, Hans-Joachim, 91054 Erlangen (DE)
(86) Internationale Anmeldenummer: PCT/EP2016/052631
(87) Internationale Veröffentlichungsnummer: WO 2017/137063

(56) Entgegenhaltungen:
- EP-A1- 2 549 634
- WO-A1-2012/116738
- WO-A1-2013/060354
- WO-A1-2013/060354
- WO-A1-2013/091675
- DE-A1-102011 006 345

## Beschreibung

Die Erfindung betrifft ein Konvertermodul für einen Mehrstufenumrichter, umfassend einen Energiespeicher in Parallelschaltung zu einer Reihenschaltung einer ersten und einer zweiten Halbleiterschalteinheit, wobei wenigstens eine der Halbleiterschalteinheiten einen Zweirichtungsschalter aufweist.

Derartige Konvertermodule sind beispielsweise aus der WO 2013/060354 A1 und der WO 2012/116738 A1 bekannt. Die bekannten Konvertermodule sind Teil von modularen Mehrstufenumrichtern. Die modularen Mehrstufenumrichter weisen eine Mehrzahl von Phasenzweigen auf, die sich jeweils zwischen einem Gleichspannungspol und einem Wechselspannungsanschluss der Mehrstufenumrichter erstrecken. In jedem der Phasenzweige ist eine Reihenschaltung der zweipoligen Konvertermodule angeordnet. Die bekannten Konvertermodule sind als Halbbrückenschaltungen ausgebildet. Eine von zwei Anschlussklemmen des Konvertermoduls ist mit dem Energiespeicher verbunden. Die andere Anschlussklemme ist mit einem Potenzialpunkt zwischen den beiden Halbleiterschalteinheiten angeordnet. Die zwischen den beiden Anschlussklemmen, in dem sogenannten Brückenzweig des Konvertermoduls angeordnete Halbleiterschalteinheit weist den Zweirichtungsschalter auf. Die andere Halbleiterschalteinheit umfasst einen ein- und abschaltbaren Halbleiterschalter mit einer Sperr- und einer Durchlassrichtung auf, wobei dem Halbleiterschalter eine Freilaufdiode antiparallel, d.h. entgegen der Durchlassrichtung des Halbleiterschalters geschaltet ist. Der Zweirichtungsschalter im Sinne der oben genannten Dokumente zum Stand der Technik ist ein Halbleiterschalter oder eine Anordnung einzelner Halbleiterschalter, der in beiden Stromrichtungen ein- und abschaltbar ist. Eine Vorwärtsrichtung des Zweirichtungsschalters kann als die Durchlassrichtung des in Reihe angeordneten Halbleiterschalters der anderen Halbleiterschalteinheit definiert werden. Entsprechend kann eine Rückwärtsrichtung des Zweirichtungsschalters als die Durchlassrichtung der Freilaufdiode definiert werden. Der Zweirichtungsschalter ist mittels einer geeigneten Steuervorrichtung in beiden Richtungen unabhängig voneinander steuerbar. Aufgrund der Sperrfähigkeit des Zweirichtungsschalters in dessen Rückwärtsrichtung kann das bekannte Konvertermodul dazu verwendet werden, einen Kurzschlussstrom auf einer Gleichspannungsseite des Mehrstufenumrichters abzuschalten.

Für einen zuverlässigen Betrieb der Mehrstufenumrichter mit den bekannten Konvertermodulen müssen die Energiespeicher der Konvertermodule bei Inbetriebnahme vorgeladen werden. Ist jedoch der Zweirichtungsschalter in seiner Ausgangsstellung gesperrt und verfügt die Steuervorrichtung über keine aktive Energieversorgung, so kann eine Vorladung des Energiespeichers nicht gewährleistet werden. Dies kann beispielsweise insbesondere dann der Fall sein, wenn die Energieversorgung der Steuervorrichtung aus dem Energiespeicher des Konvertermoduls gespeist wird.

Die Aufgabe der Erfindung ist es, ein artgemäßes Konvertermodul vorzuschlagen, das einen möglichst zuverlässigen Betrieb des Mehrstufenumrichters ermöglicht.

Die Aufgabe wird durch ein Konvertermodul nach Anspruch 1 gelöst, wobei eine Einschalteinheit in Parallelschaltung zum Zweirichtungsschalter vorgesehen ist, mittels der aus einer am Zweirichtungsschalter abfallenden Spannung eine Einschaltspannung zum Einschalten des Zweirichtungsschalters erzeugbar ist.

Wird das Konvertermodul, beispielsweise zusammen mit weiteren Konvertermodulen eines Mehrstufenumrichters, mit einem Wechselspannungsnetz verbunden, so fällt am Zweirichtungsschalter eine Spannung Uz ab. Aus dieser Spannung Uz kann mittels der Einschalteinheit die Einschaltspannung generiert werden. Die Einschaltspannung ist eine Spannung an einem Steueranschluss des Zweirichtungsschalters, wobei das Anlegen der Einschaltspannung am Steueranschluss ein Einschalten des Zweirichtungsschalters bewirkt. Dabei kann es ausreichend sein, wenn der Zweirichtungsschalter nur in dessen Vorwärtsrichtung oder nur in dessen Rückwärtsrichtung mittels der Einschalteinheit bzw. der erzeugten Einschaltspannung einschaltbar ist. Ist das Konvertermodul beispielsweise wie das bekannte Konvertermodul als Halbbrückenschaltung ausgebildet, so reicht es aus, den im Brückenzweig angeordneten Zweirichtungsschalter mittels der Einschalteinheit in dessen Rückwärtsrichtung einzuschalten.

Der Zweirichtungsschalter im Sinne dieser Erfindung ist demnach ein Halbleiterschalter mit einer Sperrfähigkeit sowohl in der Vorwärts- als auch in der Rückwärtsrichtung. Der Zweirichtungsschalter kann beispielsweise als eine Baueinheit mit zwei antiparallel angeordneten sperrfähigen Halbleitern realisiert werden. Bezüglich weiterer Beispiele und Einzelheiten zum Aufbau des Zweirichtungsschalters wird hiermit auf die bereits genannte WO 2013/060354 A1 verwiesen.

Die Einschaltspannung wird durch eine Spannungsteilung der am Zweirichtungsschalter abfallenden Spannung erzeugt. Auf diese Weise kann auf besonders einfache Weise die zum Einschalten des Zweirichtungsschalters erforderliche Einschaltspannung erzeugt werden. Die Spannungsteilung ist durch eine Spannungsteilerschaltung parallel zum Zweirichtungsschalter realisiert. Geeigneterweise ist die Spannungteilerschaltung hochohmig.

Erfindungsgemäß umfasst die Einschalteinheit einen Deaktivierungsschalter, mittels dessen die Einschalteinheit deaktivierbar ist. Dementsprechend ist eine Ansteuerung des Zweirichtungsschalters bzw. der den Zweirichtungsschalter aufweisenden Halbleiterschalteinheit in einem Normalbetrieb des Konvertermoduls, d.h. während die Energieversorgung der Steuervorrichtung gewährleistet ist, von dem Einschalten des Zweirichtungsschalters mittels der Einschalteinheit entkoppelt. Sobald die Energieversorgung der Steuervorrichtung gewährleistet ist, übernimmt diese die Ansteuerung des Zweirichtungsschalters. Die Einschalteinheit wird in diesem Fall deaktiviert. Die Deaktivierung kann beispielsweise erfolgen, sobald der Energiespeicher des Konvertermoduls genügend oder vollständig geladen ist. Eine geeignete Erkennungseinrichtung erkennt beispielsweise, ob der Energiespeicher gemäß einer vorbestimmten Bedingung genügend geladen ist und leitet eine Abschaltung beziehungsweise Sperrung des Deaktivierungsschalters ein, so dass die Einschalteinheit deaktiviert wird.

Gemäß der Erfindung umfasst die Einschalteinheit einen ersten Teilerzweig zwischen einem ersten Anschluss des Zweirichtungsschalters und einem mittleren Potenzialpunkt, einen zweiten Teilerzweig zwischen einem zweiten Anschluss des Zweirichtungsschalters und dem mittleren Potenzialpunkt sowie einen Steuerzweig zwischen einem Steueranschluss des Zweirichtungsschalters und dem mittleren Potenzialpunkt. Dabei umfassen der erste und zweite Teilerzweig jeweils wenigstens ein Widerstandselement. Die Widerstandselemente sind derart bemessen, dass durch eine Spannungsteilung der am Zweirichtungsschalter abfallenden Spannung die Einschaltspannung zum Einschalten des Zweirichtungsschalters erzeugbar ist. Die Einschalteinheit entspricht demnach einer Spannungsteilerschaltung, mittels der die am Zweirichtungsschalter abfallende Spannung geteilt wird. Auf diese Weise ist eine besonders einfache Ausgestaltung der Einschalteinheit bereitgestellt. Falls der Zweirichtungsschalter aufgrund seines Aufbaus über mehrere Steueranschlüsse verfügt, so kann der Steuerzweig den mittleren Potenzialpunkt zweckmäßigerweise mit nur einem der Steueranschlüsse verbinden. Beispielsweise verbindet der Steuerzweig den mittleren Potenzialpunkt mit dem Steueranschluss für das Schalten des Zweirichtungsschalters in der Rückwärtsrichtung. Die Spannungsteilerschaltung umfasst Teilerwiderstände.

Beispielsweise sind im ersten Teilerzweig ein erster Teilerwiderstand und im zweiten Teilerzweig ein zweiter Teilerwiderstand angeordnet. Die Teilerwiderstände sind geeignet bemessen, um die Einschaltspannung zu erzeugen.

Erfindungsgemäß ist der Deaktivierungsschalter im ersten oder zweiten Teilerzweig angeordnet. Der Steuerzweig kann damit vorteilhaft als Teil einer Verbindung des Steueranschlusses mit der Steuervorrichtung zum Ansteuern des Zweirichtungsschalters im Normalbetrieb verwendet werden.

Bevorzugt ist der Deaktivierungsschalter ein in dessen Durchlassrichtung passiv leitender, abschaltbarer Halbleiterschalter. Mit dem passiv leitenden Deaktivierungsschalter ist eine Einschalteinheit bereitgestellt, die im Allgemeinen keine eigene Energieversorgung braucht. Beispielsweise kann damit eine passive Spannungsteilung realisiert werden.

Vorzugsweise ist der Deaktivierungsschalter ein JFET-Schalter (Sperrschicht-Feldeffekttransistor-Schalter). Ein solcher Schalter ist als ein passiv leitender, sperrfähiger Halbleiter dem Fachmann bekannt.

Gemäß einer Ausführungsform der Erfindung umfasst der Zweirichtungsschalter einen ersten steuerbaren ein- und abschaltbaren Halbleiterschalter und einen zweiten steuerbaren ein- und abschaltbaren Halbleiterschalter, wobei der zweite Halbleiterschalter zum ersten Halbleiterschalter antiparallel angeordnet ist. Gemäß dieser Ausführungsform sind vorzugsweise der erste Teilerzweig zwischen einem Emitteranschluss des ersten Halbleiterschalters und einem mittleren Potenzialpunkt, der zweite Teilerzweig zwischen einem Kollektoranchluss des ersten Halbleiterschalters und dem mittleren Potenzialpunkt und der Steuerzweig zwischen einem Steueranschluss des ersten Halbleiterschalters und dem mittleren Potenzialpunkt angeordnet. Die beiden Halbleiterschalter des Zweirichtungsschalters gemäß dieser Ausgestaltung der Erfindung können beispielsweise derart innerhalb des Konvertermoduls angeordnet sein, dass eine Sperrung des ersten Halbleiterschalters eine Sperrung des Zweirichtungsschalters in dessen Rückwärtsrichtung ermöglicht. Dabei können die Teilerzweige auch über weitere Bauelemente der Einschalteinheit beziehungsweise des Zweirichtungsschalters beziehungsweise der zugeordneten Halbleiterschalteinheit zu den Anschlüssen des Zweirichtungsschalters geführt sein.

Gemäß einer weiteren Ausführungsform der Erfindung sind eine zweite Anschlussklemme des Konvertermoduls mit dem Energiespeicher und eine erste Anschlussklemme des Konvertermoduls mit einem Potenzialpunkt zwischen den beiden Halbleiterschalteinheiten verbunden. Gemäß dieser Ausgestaltung der Erfindung bildet das Konvertermodul eine Halbbrückenschaltung mit einer Reihenschaltung der beiden Halbleiterschalteinheiten und dem Energiespeicher in Parallelschaltung zu der Reihenschaltung aus.

Bevorzugt umfasst in der zuvor beschriebenen Halbbrückenschaltung nur die zwischen den beiden Anschlussklemmen angeordnete Halbleiterschalteinheit einen Zweirichtungsschalter. Die übrige Halbleiterschalteinheit kann dabei als ein IGBT-Schalter mit einer antiparallel geschalteten Diode realisiert sein. Auf diese Weise ist eine bezüglich der Verlustleistung besonders vorteilhafte Ausgestaltung des Konvertermoduls bereitgestellt.

Die Erfindung betrifft ferner einen Mehrstufenumrichter mit einem zwischen einem Gleichspannungsanschluss und einem Wechselspannungsanschluss angeordneten Konverterzweig, wobei der Konverterzweig eine Reihenschaltung zweipoliger Konvertermodule umfasst, wobei wenigstens eines der Konvertermodule einen Zweirichtungsschalter aufweist.

Derartige Mehrstufenumrichter sind beispielsweise aus den zuvor zitierten Druckschriften bekannt.

Die Aufgabe der Erfindung besteht darin, einen solchen Mehrstufenumrichter vorzuschlagen, der möglichst zuverlässig im Betrieb ist.

Die Aufgabe wird bei einem artgemäßen Mehrstufenumrichter dadurch gelöst, dass wenigstens eines der Konvertermodule ein Konvertermodul nach Anspruch 1 ist.

Die Vorteile des erfindungsgemäßen Mehrstufenumrichters ergeben sich in entsprechender Weise aus den zuvor beschriebenen Vorteilen des erfindungsgemäßen Konvertermoduls.

Der Mehrstufenunmrichter kann beispielsweise zwischen einem Wechselspannungsnetz und einem Gleichspannungsnetz angeordnet sein. Der Wechselspannungsanschluss des Mehrstufenumrichters kann beispielsweise über einen geeigneten Transformator mit dem Wechselspannungsnetz verbindbar sein.

Alle zuvor beschriebenen Ausführungsvarianten des erfindungsgemäßen Konvertermoduls können im Übrigen einzeln oder in Kombination bei dem erfindungsgemäßen Mehrstufenumrichter eingesetzt werden.

Aufgrund des Sperrfähigkeit der Konvertermodule des Mehrstufenumrichters unabhängig von der Polarität des Stromes durch den Mehrstufenumrichter ist der erfindungsgemäße Mehrstufenumrichter dazu besonders geeignet, in Hochspannungsgleichstromübertragungsanlagen (HGÜ-Anlagen) eingesetzt zu werden, die elektrische Leistung in oder aus einem verzweigten und/oder vermaschten Gleichspannungsnetz übertragen.

Die Erfindung betrifft zudem ein Verfahren zum Betrieb eines in Anspruch 1 definierten Konvertermoduls.

Die Aufgabe der Erfindung ist es, ein derartiges Verfahren anzugeben, das einen möglichst zuverlässigen Betrieb des Konvertermoduls ermöglicht.

Die Aufgabe wird durch ein Verfahren nach Anspruch 8 gelöst.

Das erfindungsgemäße Verfahren ermöglicht ein zuverlässiges Vorladen des Energiespeichers des Konvertermoduls nach Anspruch 1 und somit dessen zuverlässigen Betrieb.

Die Erfindung soll im Folgenden anhand der Figuren 1 bis 3 näher erläutert werden.
Figur 1 zeigt ein Ausführungsbeispiel eines erfindungsgemäßen Mehrstufenumrichters mit einem erfindungsgemäßen Konvertermodul in einer schematischen Darstellung;
Figur 2 zeigt ein Ausführungsbeispiel eines Zweirichtungsschalters in einer schematischen Darstellung;
Figur 3 zeigt ein Ausführungsbeispiel einer Einschalteinheit in einer schematischen Darstellung.

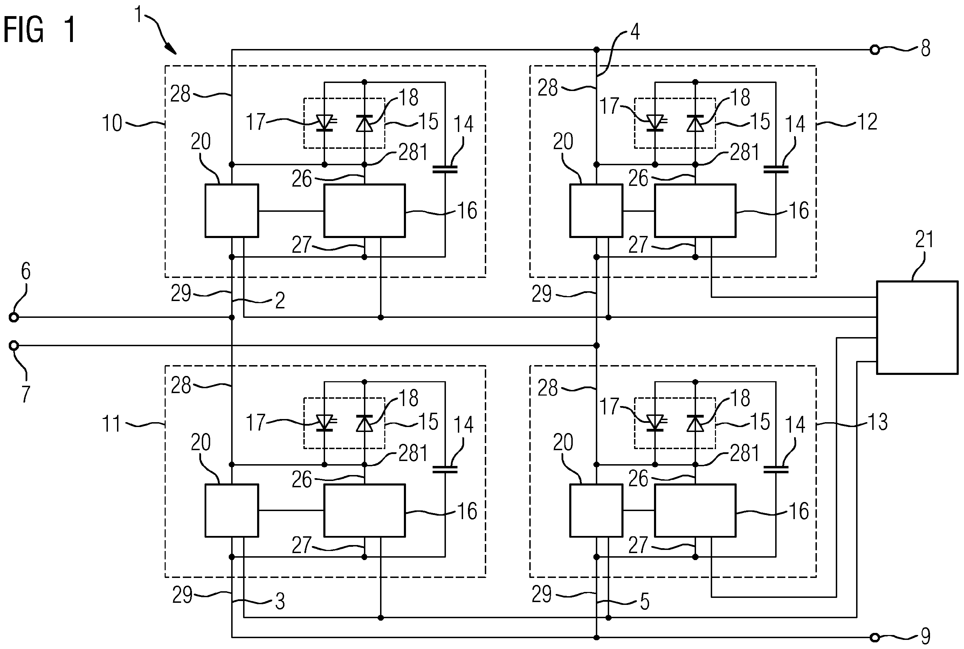

Im Einzelnen ist in Figur 1 ein Mehrstufenumrichter 1 dargestellt. Der Mehrstufenumrichter 1 weist einen ersten Phasenzweig 2 auf, der sich zwischen einem ersten Wechselspannungsanschluss 6 und einem ersten Gleichspannungsanschluss 8 erstreckt. Ferner umfasst der Mehrstufenumrichter 1 einen zweiten Phasenzweig 3, der sich zwischen dem ersten Wechselspannungsanschluss 6 und einem zweiten Gleichspannungsanschluss 9 erstreckt, einen dritten Phasenzweig 4, der sich zwischen einem zweiten Wechselspannungsanschluss 7 und dem ersten Gleichspannungsanschluss 8 erstreckt, sowie einen vierten Phasenzweig 5, der sich zwischen dem zweiten Wechselspannungsanschluss 7 und dem zweiten Gleichspannungsanschluss 9 erstreckt. Die Wechselspannungsanschlüsse 6, 7 sind dazu eingerichtet, den Mehrstufenumrichter 1 mit einem figürlich nicht dargestellten Wechselspannungsnetz zu verbinden. Die Gleichspannungsanschlüsse 8, 9 sind dazu eingerichtet, den Mehrstufenumrichter 1 mit einem figürlich nicht dargestellten Gleichspannungsnetz zu verbinden. Dabei besteht die an die Gleichspannungsanschlüsse 8, 9 anzuschließende Gleichspannungsleitung aus zwei Gleichspannungsleitern, wobei einer der Gleichspannungsleiter auch durch eine Erdverbindung gegeben sein kann.

Im in Figur 1 dargestellten Ausführungsbeispiel ist das anzuschließende Wechselspannungsnetz zweiphasig, so dass auch der Mehrstufenumrichter 1 zweiphasig ausgebildet ist. Es ist im Rahmen der Erfindung selbstverständlich ebenfalls möglich, den Mehrstufenumrichter 1 drei- oder mehrphasig auszubilden, wobei der Mehrstufenumrichter in einem solchen Fall in einer dem Fachmann bekannten Weise um weitere Phasenzweige erweitert werden kann.

Im ersten Phasenzweig 2 ist eine Reihenschaltung zweipoliger Konvertermodule angeordnet, wobei in der Figur 1 aus Gründen der Übersichtlichkeit lediglich ein erstes Konvertermodul 10 grafisch dargestellt ist. Die weiteren, figürlich nicht dargestellten Konvertermodule weisen den gleichen Aufbau auf, wie das erste Konvertermodul 10. Entsprechend ist im zweiten Phasenzweig 3 eine Reihenschaltung von Konvertermodulen angeordnet, von denen nur ein zweites Konvertermodul 11 grafisch dargestellt ist. In gleicher Weise weist der dritte Phasenzweig 4 eine Reihenschaltung von Konvertermodulen, von denen nur ein drittes Konvertermodul 12 grafisch dargestellt ist und schließlich umfasst der vierte Phasenzweig 5 ebenfalls eine Reihenschaltung von Konvertermodulen, wovon nur ein viertes Konvertermodul 13 dargestellt ist. In dem in Figur 1 gezeigten Ausführungsbeispiel sind alle Konvertermodule, sowohl die grafisch dargestellten als auch die grafisch nicht dargestellten gleichartig aufgebaut.

Am Beispiel des ersten Konvertermoduls 10 wird dessen innerer Aufbau im Folgenden näher erläutert. Das erste Konvertermodul 10 umfasst einen Energiespeicher in Form eines Kondensators 14. Parallel zum Kondensator 14 ist eine Reihenschaltung aus einer ersten Halbleiterschalteinheit 15 und einer zweiten Halbleiterschalteinheit 16 angeordnet.

Die erste Halbleiterschalteinheit 15 umfasst einen ein- und abschaltbaren Halbleiterschalter 17, dem eine Freilaufdiode 18 antiparallel geschaltet ist. Die Durchlassrichtung der Freilaufdiode 18 ist der sperrbaren Durchlassrichtung des Halbleiterschalters 17 entgegengesetzt. Der Halbleiterschalter 17 ist beispielsweise ein gate turn-off thyristor (GTO) oder ein insulated-gate bipolar transistor (IGBT) oder auch ein integrated gate-commutated thyristor (IGCT).

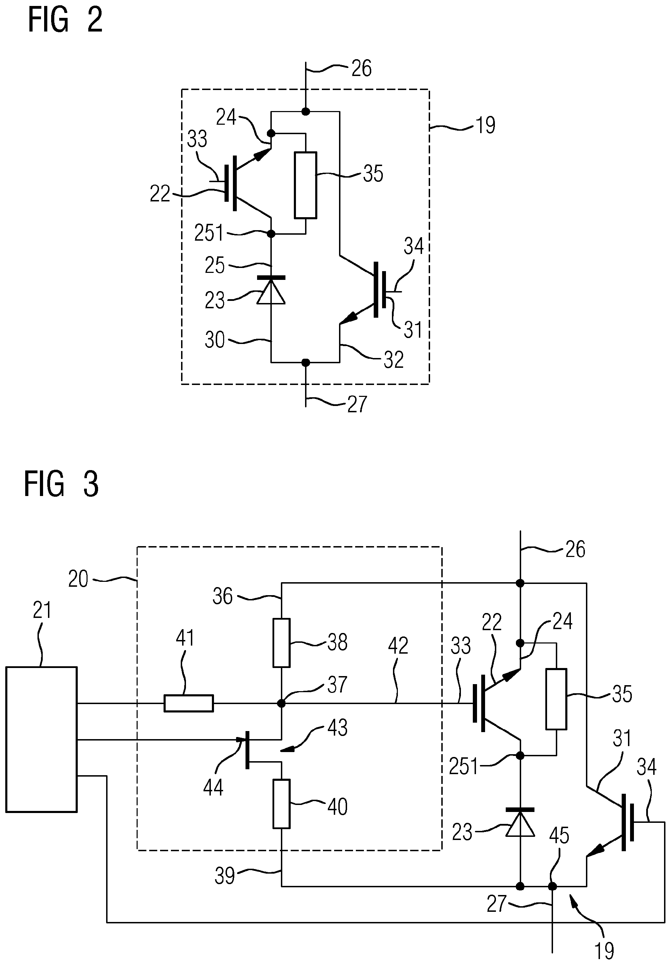

Die zweite Halbleiterschalteinheit 16 umfasst einen Zweirichtungsschalter 19, auf dessen Aufbau in Figur 2 näher eingegangen wird. Der Zweirichtungsschalter 19 ist als Zweipol ausgebildet und weist einen ersten Anschluss 26 und einen zweiten Anschluss 27 auf.

Parallel zur zweiten Halbleiterschalteinheit 16 beziehungsweise zum Zweirichtungsschalter 19 ist eine Einschalteinheit 20 angeordnet. Auf den Aufbau der Einschalteinheit 20 wird im Zusammenhang mit der Beschreibung der Figur 3 näher eingegangen.

Die zweite Halbleiterschalteinheit 16 ist mit einer Steuervorrichtung 21 verbunden. Auch die erste Halbleiterschalteinheit 15 ist mit der Steuervorrichtung 21 verbunden, was jedoch aus Gründen der Übersichtlichkeit in Figur 1 grafisch nicht dargestellt ist. Die Steuervorrichtung 21 ist dazu eingerichtet, die Halbleiterschalter des ersten Konvertermoduls 10 entsprechend einem vorgegebenen Ansteueralgorithmus anzusteuern. Die Steuervorrichtung 21 übernimmt auch die Ansteuerung aller übrigen Halbleiterschalter in allen Konvertermodulen des Mehrstufenumrichters 1.

Im vorliegenden Ausführungbeispiel ist die Einschalteinheit 20 steuerbar ausgeführt. Die Steuerung der Einschalteinheit 20 beziehungsweise steuerbarer Bauelemente der Einschalteinheit 20 übernimmt die Steuervorrichtung 21.

Eine erste Anschlussklemme 28 des ersten Konvertermoduls 10 ist mit einem Potenzialpunkt 281 zwischen der ersten und der zweiten Halbleiterschalteinheit 15 bzw. 16 verbunden. Eine zweite Anschlussklemme 29 ist direkt mit einem Pol des Kondensators 14 verbunden. Das erste Konvertermodul 10 bildet demnach eine Halbbrückenschaltung aus.

Figur 2 zeigt ein Ausführungsbeispiel eines Zweirichtungsschalters 19 eines der Konvertermodule 10-13 des Mehrstufenumrichters 1 der Figur 1. Ein erster IGBT 22 ist in Reihe mit einer Diode 23 geschaltet, wobei der Emitter 24 des IGBT 22 und die Kathode 25 der Diode 23 in Richtung des ersten Anschlusses 16 ausgerichtet sind. Der Emitter 24 des ersten IGBT 22 ist mit dem ersten Anschluss 26 und die Anode 30 der Diode 23 mit dem zweiten Anschluss 27 verbunden. Parallel zu der Reihenschaltung aus dem ersten IGBT 22 und der Diode 23 ist ein zweiter IGBT 31 angeordnet. Der Emitter 32 des zweiten IGBT 31 ist mit dem zweiten Anschluss 27 des Zweirichtungsschalters 19 verbunden. Der erste und der zweite IGBT 22 bzw. 31 können mittels ihrer Steueranschlüsse 33 bzw. 34 angesteuert, d.h. ein- und abgeschaltet werden. In einem Ausgangszustand des Zweirichtungsschalters bei Inbetriebnahme des Mehrstufenumrichters 1 ist der Zweirichtungsschalter 19 im Allgemeinen in einem gesperrten Zustand. In diesem Zustand sind beide IGBTs 22, 31 sperrend, so dass die Verbindung zwischen dem ersten Anschluss 26 und dem zweiten Anschluss 27 elektrisch nicht leitend ist. Üblicherweise kann ein solcher Zweirichtungsschalter über eine Spannungsfestigkeit von 1 kV bis zu mehr als 5 kV aufweisen.

Parallel zum ersten IGBT 22 ist eine Überspannungsschutzeinheit 35 angeordnet. Mittels der Überspannungsschutzeinheit 35 können Überspannungen am ersten IGBT 22 begrenzt werden. Die Überspannungsschutzeinheit 35 kann beispielsweise einen oder mehrere Widerstände und/oder Ableiter umfassen.

In Figur 3 ist die Einschalteinheit 20 des ersten Konvertermoduls 10 aus Figur 1 dargestellt. Die Einschalteinheit 20 wird hier im Zusammenhang mit dem Zweirichtungsschalter 19 der Figur 2 erläutert. Ein entsprechender Aufbau der Einschalteinheit 20 kann jedoch ebenfalls im Zusammenhang mit Zweirichtungsschaltern mit einem davon abweichenden Aufbau eingesetzt werden.

Die Einschalteinheit 20 weist den Aufbau eines Spannungsteilers auf. Sie umfasst einen ersten Teilerzweig 36, der sich zwischen dem ersten Anschluss 26 des Zweirichtungsschalters 19 und einem mittleren Potenzialpunkt 37 erstreckt. Ein erster Teilerwiderstand 38 ist im ersten Teilerzweig 36 angeordnet. Die Einschalteinheit 20 umfasst ferner einen zweiten Teilerzweig 39, der sich zwischen dem zweiten Anschluss 27 des Zweirichtungsschalters 19 und dem mittleren Potenzialpunkt 37 erstreckt. Ein zweiter Teilerwiderstand 40 ist im zweiten Teilerzweig 39 angeordnet. Alternativ kann der zweite Teilerzweig 39 auch über die Diode 23 zum zweiten Anschluss 27 geführt sein.

Der mittlere Potenzialpunkt 37 ist ferner über einen weiteren Widerstand 41 mit der Steuervorrichtung 21 verbunden. Die Einschalteinheit 20 weist darüber hinaus einen Steuerzweig 42 auf, der den Steueranschluss 33 des ersten IGBT 22 mit dem mittleren Potenzialpunkt 37 und damit auch mit der Steuervorrichtung 21 verbindet.

Die Einschalteinheit 20 umfasst einen Deaktivierungsschalter 43, der im zweiten Teilerzweig 39 in Reihe zum zweiten Teilerwiderstand 40 angeordnet ist. Der Deaktivierungsschalter 43 ist ein JFET und in seinem Ausgangszustand leitend. Der Deaktivierungsschalter ist im vorliegenden Ausführungsbeispiel für 3kV ausgelegt. Ein Steueranschluss 44 des Deaktivierungsschalters 43 ist ebenfalls mit der Steuervorrichtung 21 verbunden.

Im Folgenden soll die Funktionsweise der Einschalteinheit 20 im Zusammenhang mit dem zuvor beschriebenen Aufbau der Konvertermodule des Mehrstufenumrichters 1 der Figur 1 näher erläutert werden.

In der Ausgangssituation ist der Mehrstufenumrichter 1 an ein Wechselspannungsnetz angeschlossen. An den Wechselspannungsanschlüssen 6, 7 liegt demnach eine Wechselspannung an. Die Kondensatoren 14 der Konvertermodule sollen aus dem Wechselspannungsnetz geladen werden. In dem vorliegenden Ausgangszustand sind die Zweirichtungsschalter 19 in deren Rückwärtsrichtung gesperrt. Die Rückwärtsrichtung entspricht hierbei der Durchlassrichtung der Freilaufdioden 18.

Während einer ersten Zeitspanne ist das elektrische Potenzial am ersten Wechselspannungsanschluss 6 höher als das elektrische Potenzial am zweiten Wechselspannungsanschluss 7.

In diesem Fall fließt der Strom (technische Stromrichtung) im ersten Konvertermodul 10 in Durchlassrichtung der Diode 23 im Zweirichtungsschalter 19. Aufgrund der Spannungsdifferenz zwischen dem zweiten Anschluss 27 des Zweirichtungsschalters 19 und dem Steueranschluss 33 des IGBT 22 im Zweirichtungsschalter 19 wird der IGBT 22 leitend geschaltet. Der Strom kann durch den nun in Rückwärtsrichtung leitenden Zweirichtungsschalter 19 des ersten Konvertermoduls 10 fließen.

Im zweiten Konvertermodul 11 fließt der Strom über die Freilaufdiode 18 des zweiten Konvertermoduls 11 und lädt den Kondensator 14 des zweiten Konvertermoduls 11 auf.

Im dritten Konvertermodul 12 fließt der Strom entsprechend über die Freilaufdiode 18 des dritten Konvertermoduls 12 und lädt den Kondensator 14 des dritten Konvertermoduls 12 auf.

Im vierten Konvertermodul 13 fließt der Strom in Durchlassrichtung der Diode 23 im Zweirichtungsschalter 19 des vierten Konvertermoduls 13. Aufgrund der Spannungsdifferenz zwischen dem zweiten Anschluss 27 des Zweirichtungsschalters 19 und dem Steueranschluss 33 des IGBT 22 im Zweirichtungsschalter 19 wird der IGBT 22 leitend geschaltet. Der Strom kann durch den in Rückwärtsrichtung leitenden Zweirichtungsschalter 19 des vierten Konvertermoduls 13 fließen.

Bei dieser Polarität an den Anschlüssen 6 und 7 werden demnach die Kondensatoren 14 der Konvertermodule im zweiten und dritten Phasenzweig 3 bzw. 4 geladen.

Aufgrund der an den Wechselspannungsanschlüssen 6, 7 anliegenden Wechselspannung ist bei während einer zweiten Zeitspanne das elektrische Potenzial am ersten Wechselspannungsanschluss 6 niedriger als das elektrische Potenzial am zweiten Wechselspannungsanschluss 7.

Bei einer umgekehrten Polarität an den Wechselspannungsanschlüssen 6 und 7 ist die Stromrichtung entsprechend umgekehrt. Entsprechend werden bei der umgekehrten Polarität des Stromes die Kondensatoren 14 im ersten und vierten Phasenzweig 2 bzw. 5 geladen.

Sind alle Kondensatoren 14 aller Konvertermodule geladen, so ist auch die Energieversorgung der Steuervorrichtung 21 bereitgestellt. In diesem Fall kann die Steuervorrichtung 21 mittels einer geeigneten Ansteuerung des Deaktivierungsschalters 43 die Einschalteinheit 20 deaktivieren.

## Patentansprüche

1. Konvertermodul (10) für einen Mehrstufenumrichter (1), umfassend einen Energiespeicher (14) in Parallelschaltung zu einer Reihenschaltung einer ersten und einer zweiten Halbleiterschalteinheit (15, 16), wobei wenigstens eine der Halbleiterschalteinheiten (15, 16) einen Zweirichtungsschalter (19) aufweist, der ein Halbleiterschalter mit einer Sperrfähigkeit sowohl in der Vorwärts- als auch in der Rückwärtsrichtung ist,
**gekennzeichnet durch**
eine Einschalteinheit (20) in Parallelschaltung zum Zweirichtungsschalter (19), mittels der aus einer am Zweirichtungsschalter (19) abfallenden Spannung eine Einschaltspannung zum Einschalten des Zweirichtungsschalters (19) erzeugbar ist, wobei die Einschaltspannung durch eine Spannungsteilung der am Zweirichtungsschalter (19) abfallenden Spannung erzeugbar ist, wobei die Einschalteinheit (20) einen Deaktivierungsschalter (43) umfasst, mittels dessen die Einschalteinheit (20) deaktivierbar ist, wobei die Einschalteinheit (20)
- einen ersten Teilerzweig (36) zwischen einem ersten Anschluss (26) des Zweirichtungsschalters (19) und einem mittleren Potenzialpunkt (37),
- einen zweiten Teilerzweig (39) zwischen einem zweiten Anschluss (27) des Zweirichtungsschalters (19) und dem mittleren Potenzialpunkt (37) sowie
- einen Steuerzweig (42) zwischen einem Steueranschluss (33) des Zweirichtungsschalters (19) und dem mittleren Potenzialpunkt (37) umfasst, wobei der erste und zweite Teilerzweig (36, 39) jeweils wenigstens ein Widerstandselement (38, 40) umfassen, die derart bemessen sind, dass durch eine Spannungsteilung der am Zweirichtungsschalter (19) abfallenden Spannung die Einschaltspannung zum Einschalten des Zweirichtungsschalters (19) erzeugbar ist, wobei der Deaktivierungsschalter (43) im ersten oder zweiten Teilerzweig (36, 38) angeordnet ist.

2. Konvertermodul (10) nach Anspruch 1, wobei der Deaktivierungsschalter (43) ein in dessen Durchlassrichtung passiv leitender, abschaltbarer Halbleiterschalter ist.

3. Konvertermodul (10) nach Anspruch 2, wobei der Deaktivierungsschalter (43) ein JFET-Schalter ist.

4. Konvertermodul (10) nach einem der Ansprüche 1 bis 3, wobei der Zweirichtungsschalter (19) einen ersten steuerbaren ein- und abschaltbaren Halbleiterschalter (22) und einen zweiten steuerbaren ein- und abschaltbaren Halbleiterschalter (31) umfasst, wobei der zweite Halbleiterschalter (31) zum ersten Halbleiterschalter (22) antiparallel angeordnet ist, wobei
- der erste Teilerzweig (36) zwischen einem Emitteranschluss (24) des ersten Halbleiterschalters (22) und einem mittleren Potenzialpunkt (37),
- der zweite Teilerzweig (39) zwischen einem Kollektoranschluss (251) des ersten Halbleiterschalters und dem mittleren Potenzialpunkt (37) sowie
- der Steuerzweig (42) zwischen einem Steueranschluss (33) des ersten Halbleiterschalters (22) und dem mittleren Potenzialpunkt (37) angeordnet sind.

5. Konvertermodul (10) nach einem der vorangehenden Ansprüche, wobei eine erste Anschlussklemme (28) des Konvertermoduls (10) mit einem Potenzialpunkt (281) zwischen den beiden Halbleiterschalteinheiten (15, 16) und eine zweite Anschlussklemme (29) des Konvertermoduls mit dem Energiespeicher (14) verbunden sind.

6. Konvertermodul (10) nach Anspruch 5, wobei nur die zwischen den beiden Anschlussklemmen (28, 29) angeordnete Halbleiterschalteinheit (16) einen Zweirichtungsschalter (19) umfasst.

7. Mehrstufenumrichter (1) mit einem zwischen einem Gleichspannungsanschluss (8) und einem Wechselspannungsanschluss (6) angeordneten Konverterzweig (2), wobei der Konverterzweig (2) eine Reihenschaltung zweipoliger Konvertermodule umfasst, wobei wenigstens eines der Konvertermodule (10) ein Konvertermodul nach einem der Ansprüche 1 bis 6 ist.

8. Verfahren zum Betrieb eines Konvertermoduls (10) nach einem der Ansprüche 1-6 eines Mehrstufenumrichters (1) mit einem Energiespeicher (14) in Parallelschaltung zu einer Reihenschaltung zweier Halbleiterschalteinheiten (15, 16), wobei wenigstens eine der Halbleiterschalteinheiten (15, 16) einen Zweirichtungsschalter (19) umfasst, der ein Halbleiterschalter mit einer Sperrfähigkeit sowohl in der Vorwärts- als auch in der Rückwärtsrichtung ist, bei dem
eine Einschalteinheit (20) in Parallelschaltung zum Zweirichtungsschalter (19) bereitgestellt wird und
zum Vorladen des Energiespeichers (14) mittels der Einschalteinheit (10) aus einer am Zweirichtungsschalter (19) abfallenden Spannung eine Einschaltspannung zum Einschalten des Zweirichtungsschalters (19) erzeugt wird, wobei die Einschalteinheit einen Deaktivierungsschalter umfasst, mittels dessen die Einschalteinheit deaktiviert wird, sobald die Energieversorgung einer Steuervorrichtung zum Ansteuern des Zweirichtungsschalters gewährleistet ist.

## Claims

1. Converter module (10) for a multilevel converter (1), comprising an energy store (14) connected in parallel with a series circuit of a first and a second semiconductor switching unit (15, 16), wherein at least one of the semiconductor switching units (15, 16) has a bidirectional switch (19) that is a semiconductor switch having a blocking capability both in the forward and reverse directions,
**characterized by**
a switch-on unit (20) connected in parallel with the bidirectional switch (19), by means of which a switch-on voltage for switching on the bidirectional switch (19) can be generated from a voltage dropped across the bidirectional switch (19),
wherein the switch-on voltage can be generated via voltage division of the voltage dropped across the bidirectional switch (19), wherein the switch-on unit (20) comprises a deactivation switch (43), by means of which the switch-on unit (20) can be deactivated, wherein the switch-on unit (20) comprises
- a first divider branch (36) between a first connection (26) of the bidirectional switch (19) and a central potential point (37),
- a second divider branch (39) between a second connection (27) of the bidirectional switch (19) and the central potential point (37), and
- a control branch (42) between a control connection (33) of the bidirectional switch (19) and the central potential point (37), wherein the first and second divider branches (36, 39) respectively comprise at least one resistance element (38, 40) that are dimensioned in such a way that the switch-on voltage for switching on the bidirectional switch (19) can be generated via voltage division of the voltage dropped across the bidirectional switch (19), wherein the deactivation switch (43) is arranged in the first or second divider branch (36, 38)

2. Converter module (10) according to Claim 1, wherein the deactivation switch (43) is a semiconductor switch that is passively conductive in its forward direction and that can be switched off.

3. Converter module (10) according to Claim 2, wherein the deactivation switch (43) is a JFET switch.

4. Converter module (10) according to one of Claims 1 to 3, wherein the bidirectional switch (19) comprises a first controllable semiconductor switch (22) that can be switched on and off, and a second controllable semiconductor switch (31) that can be switched on and off, wherein the second semiconductor switch (31) is arranged in anti-parallel with the first semiconductor switch (22), wherein
- the first divider branch (36) is arranged between an emitter connection (24) of the first semiconductor switch (22) and a central potential point (37),
- the second divider branch (39) is arranged between a collector connection (251) of the first semiconductor switch and the central potential point (37), and
- the control branch (42) is arranged between a control connection (33) of the first semiconductor switch (22) and the central potential point (37).

5. Converter module (10) according to one of the preceding claims, wherein a first connection terminal (28) of the converter module (10) is connected to a potential point (281) between the two semiconductor switching units (15, 16), and a second connection terminal (29) of the converter module is connected to the energy store (14).

6. Converter module (10) according to Claim 5, wherein only the semiconductor switching unit (16) arranged between the two connection terminals (28, 29) comprises a bidirectional switch (19) .

7. Multilevel converter (1) comprising a converter branch (2) that is arranged between a DC voltage connection (8) and an AC voltage connection (6), wherein the converter branch (2) comprises a series circuit of two-pole converter modules, wherein at least one of the converter modules (10) is a converter module according to one of Claims 1 to 6.

8. Method for operating a converter module (10), according to one of Claims 1-6, of a multilevel converter (1) comprising an energy store (14) connected in parallel with a series circuit of two semiconductor switching units (15, 16), wherein at least one of the semiconductor switching units (15, 16) comprises a bidirectional switch (19) that is a semiconductor switch having a blocking capability both in the forward and reverse directions, in which
a switch-on unit (20) is provided connected in parallel with the bidirectional switch (19), and
for precharging the energy store (14) by means of the switch-on unit (10), a switch-on voltage for switching on the bidirectional switch (19) is generated from a voltage dropped across the bidirectional switch (19), wherein the switch-on unit comprises a deactivation switch, by means of which the switch-on unit is deactivated as soon as the energy supply to a control device for actuating the bidirectional switch is ensured.

## Revendications

1. Module (10) de convertisseur pour un convertisseur (1) à plusieurs étages, comprenant un accumulateur (14) d'énergie monté en parallèle avec un circuit série d'une première et d'une deuxième unités (15, 16) d'interruption à semiconducteur, dans lequel au moins l'une des unités (15, 16) d'interruption à semiconducteur a un interrupteur (19) bidirectionnel, qui est un interrupteur à semiconducteur ayant une aptitude au blocage, tant dans le sens direct qu'également dans le sens inverse,
**caractérisé par**
un unité (20) de mise en circuit, qui est montée en parallèle avec l'interrupteur (19) bidirectionnel et au moyen de laquelle il peut être, au moyen d'une tension chutant aux bornes de l'interrupteur (19) bidirectionnel, produit une tension de fermeture pour fermer l'interrupteur (19) bidirectionnel, dans lequel la tension de fermeture peut être produite par une division de la tension chutant aux bornes de l'interrupteur (19) bidirectionnel, dans lequel l'unité (20) de mise en circuit comprend un interrupteur (43) de désactivation au moyen duquel l'unité (20) de mise en circuit peut être désactivée, dans lequel l'unité (20) de mise en circuit comprend
- une première branche (36) de diviseur entre une première borne (26) de l'interrupteur (19) bidirectionnel et un point (37) médian de potentiel,
- une deuxième branche (39) de diviseur entre une deuxième borne (27) de l'interrupteur (19) bidirectionnel et le point (37) médian de potentiel, ainsi que
- une branche (42) de commande entre une borne (33) de commande de l'interrupteur (19) bidirectionnel et le point (37) médian de potentiel, dans lequel la première et la deuxième branches (36, 39) de diviseur comprennent chacune au moins un élément (38, 40) de résistance dimensionné de manière à pouvoir, par une division de la tension chutant aux bornes de l'interrupteur (19) bidirectionnel, produire une tension de fermeture pour la fermeture de l'interrupteur (19) bidirectionnel, l'interrupteur (43) de désactivation étant monté dans la première ou la deuxième branche (36, 38) de diviseur.

2. Module (10) de convertisseur suivant la revendication 1, dans lequel l'interrupteur (43) de désactivation est un interrupteur à semiconducteur pouvant être ouvert et conduisant passivement dans son sens direct.

3. Module (10) de convertisseur suivant la revendication 2, dans lequel l'interrupteur (43) de désactivation est un interrupteur JFET.

4. Module (10) de convertisseur suivant l'une des revendications 1 à 3, dans lequel l'interrupteur (19) bidirectionnel comprend un premier interrupteur (22) à semiconducteur pouvant être commandé de manière à être fermé et ouvert, et un deuxième interrupteur (31) à semiconducteur pouvant être commandé de manière à être fermé et ouvert, dans lequel le deuxième interrupteur (31) à semiconducteur est monté tête bêche par rapport au premier interrupteur (22) à semiconducteur, dans lequel
- la première branche (36) de diviseur est montée entre une borne (24) d'émetteur du premier interrupteur (22) à semiconducteur et un point (37) médian de potentiel,
- la deuxième branche (39) de diviseur est montée entre une borne (251) de connecteur du premier interrupteur à semiconducteur et le point (37) médian de potentiel, ainsi que
- la branche (42) de commande est montée entre une borne (33) de commande du premier interrupteur (22) à semiconducteur et le point (37) médian de potentiel.

5. Module (10) de convertisseur suivant l'une des revendications précédentes, dans lequel une première borne (28) de connexion du module (10) de convertisseur est reliée à un point (281) de potentiel entre les deux unités (15, 16) d'interruption à semiconducteur et une deuxième borne (29) de connexion du module de convertisseur est reliée à l'accumulateur (14) d'énergie.

6. Module (10) de convertisseur suivant la revendication 5, dans lequel seulement l'unité (16) d'interruption à semiconducteur, montée entre les deux bornes (28, 29) de connexion, comprend un interrupteur (19) bidirectionnel.

7. Convertisseur (1) à plusieurs étages comprenant une branche (2) de convertisseur montée entre une borne (8) pour la tension continue et une borne (6) pour la tension alternative, dans lequel la branche (2) de convertisseur comprend un circuit série de deux modules de convertisseur bipolaire, dans lequel au moins l'un des modules (10) de convertisseur est un module de convertisseur suivant l'une des revendications 1 à 6.

8. Procédé pour faire fonctionner un module (10) de convertisseur suivant l'une des revendications 1 à 6 d'un convertisseur (1) à plusieurs étages comprenant un accumulateur (14) d'énergie monté en parallèle avec un circuit série de deux unités (15, 16) d'interruption à semiconducteur, dans lequel au moins l'une des unités (15, 16) à semiconducteur comprend un interrupteur (19) bidirectionnel, qui est un interrupteur à semiconducteur ayant une aptitude au blocage, tant dans le sens direct que dans le sens inverse, dans lequel
on se procure une unité (20) de mise en circuit montée en parallèle avec l'interrupteur (19) bidirectionnel, et
pour la précharge de l'accumulateur (14) d'énergie, on produit, au moyen de l'unité (10) de mise en circuit, à partir d'une tension chutant aux bornes de l'interrupteur (19) bidirectionnel, une tension de fermeture pour la fermeture de l'interrupteur (19) bidirectionnel, dans lequel l'unité d'interruption comprend un interrupteur de désactivation, au moyen duquel on désactive l'unité de mise en circuit, dès que l'alimentation en énergie d'un montage de commande de l'interrupteur bidirectionnel est assurée.
